# EUROPEAN PATENT APPLICATION

(11) **EP 4 831 580 A1**
(43) Date of publication of application: **28.10.2026**
(21) Application number: 26173761.3
(22) Date of filing: 21.04.2026
(51) Int. Cl.: G01B 7/00, G01N 21/65

(54) **SYSTEMS AND METHODS FOR CALIBRATING A SAMPLE POSITIONING SYSTEM USING SPECTRAL MEASUREMENTS**

(30) Priority: 23.04.2025 US 202519187439
(71) Applicant: Thermo Electron Scientific Instruments LLC, Madison, WI 53711 (US)
(72) Inventor: PIOTRZKOWSKI, Andrew, Madison (US); DAUN, Michael, Fitchburg (US); HIBBARD, Noah, Monroe (US); YAN, Min, Verona (US)
(74) Representative: Boult Wade Tennant LLP

(57) **Abstract**

An illustrative calibration system calibrates motion of a sample positioning system included in a spectroscopy system by determining, based on one or more spectral measurements output by the spectroscopy system, one or more locations associated with one or more features of a calibration sample supported by the sample positioning system. Based on the one or more locations, the calibration system generates calibration data for calibrating motion of the sample positioning system along an x-axis and a y-axis of the sample positioning system.

## Description

### FIELD OF THE INVENTION

The present description relates generally to methods and systems for spectroscopy, and more particularly, to calibrating a sample positioning system included in a spectroscopy system using spectral measurements.

### BACKGROUND INFORMATION

Spectrometry is a technique used to identify characteristics of a sample (e.g., gas, liquid, and/or solid samples) by directing light at the sample and detecting the light leaving the sample by a photosensitive detector. The detected light is analyzed, such as for changes in wavelength, to provide information regarding the composition of the sample, its chemical bonds, and/or other features. Such a chemical analysis may be accomplished using infrared light, Raman scattered light, or other types of light.

As an illustrative example, in Raman spectroscopy, when an illuminating light is incident upon the sample, molecular bonds in the sample material can be excited by the incident light and can emit radiation that can be detected as scattered light. The Rayleigh component of the scattered light corresponds to the light emitted when the molecule relaxes from the excited state to the ground state. In some instances, the molecule relaxes to a different vibrational or rotational level in the ground state. This produces Raman scattering components at Stokes and Anti-Stokes frequencies. A sample composed of multiple molecular species may produce a spectrum of such Raman scattering. The Raman scattering components can be detected and analyzed to determine information regarding the composition of the sample.

In some scenarios, the sample is positioned relative to the illuminating light, such as by a sample positioning system, to perform spectral measurements of the sample (e.g., Raman spectroscopy). For example, the sample positioning system may be configured to receive the sample at one or more locations and move (e.g., along an x-axis, y-axis, and/or z-axis) to position the one or more locations relative to a focal point of the illuminating light to illuminate the sample at the one or more locations. In some instances, the sample may not be properly aligned with the focal point of the illuminating light such as due to variations in motion of the sample positioning system (e.g., due to manufacturing variability) and/or positioning of the sample, which may result in variances, inaccuracies, and/or reduced quality in the acquired spectral data. Accordingly, it may be desirable to calibrate motion of the sample positioning system.

### SUMMARY

The following description presents a simplified summary of one or more aspects of the methods and systems described herein in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects of the methods and systems described herein in a simplified form as a prelude to the more detailed description that is presented below.

In some examples, a method for calibrating a sample positioning system of a spectroscopy system comprises determining, based on one or more spectral measurements output by the spectroscopy system, a first location associated with a first feature of a calibration sample supported by the sample positioning system, wherein the sample positioning system is configured to translate the calibration sample along an x-axis and a y-axis to position the calibration sample for performing the one or more spectral measurements, wherein the first location is representative of a coordinate of the first feature in the x-axis and the y-axis of the sample positioning system; determining, based on one or more additional spectral measurements output by the spectroscopy system, one or more additional locations associated with one or more additional features of the calibration sample, the one or more additional locations representative of one or more additional coordinates of the one or more additional features in the x-axis and the y-axis relative to the first location; and generating, based on the first location and the one or more additional locations, calibration data for calibrating motion of the sample positioning system in the x-axis and the y-axis.

In some examples, a spectroscopy system comprises a sample positioning system, the sample positioning system is configured to move a sample along an x-axis and a y-axis of the sample positioning system; a source and a detector for performing spectral measurements of the sample; a memory for storing instructions; and one or more processors communicatively coupled to the memory and configured to execute the instructions to perform a process comprising: performing one or more spectral measurements of a calibration sample; determining, based on the one or more spectral measurements, a first location associated with a first feature of the calibration sample, wherein the first location is representative of a coordinate of the first feature along the x-axis and the y-axis; performing one or more additional spectral measurements of the calibration sample; determining, based on the one or more additional spectral measurements, one or more additional locations associated with one or more additional features of the calibration sample, the one or more additional locations representative of one or more additional coordinates of the one or more additional features along the x-axis and the y-axis; generating, based on the first location and the one or more additional locations, calibration data for calibrating motion of the sample positioning system in the x-axis and the y-axis; positioning the sample, using the sample positioning system, based on the calibration data; and performing spectral measurements of the sample.

In some illustrative embodiments, a calibration plate comprises a first set of at least three wells, each well of the first set of at least three wells having a first aperture and a non-focal depth-dependent reference material; and a second set of at least three wells, each well of the second set of at least three wells having a second aperture and a focal depth-dependent reference material.

### BRIEF DESCRIPTION OF THE DRAWINGS

The accompanying drawings illustrate various embodiments and are a part of the specification. The illustrated embodiments are merely examples and do not limit the scope of the disclosure. Throughout the drawings, identical or similar reference numbers designate identical or similar elements.
FIG. 1 shows a schematic of an illustrative spectrometry system including a sample positioning system.
FIG. 2 shows an illustrative implementation of a sample positioning system.
FIG. 3 shows a perspective view of an illustrative implementation of a sample holder for use with a sample positioning system.
FIG. 4A shows a top view of the sample holder of FIG. 3.
FIG. 4B shows a cross-sectional view of the sample holder of FIG. 3 taken along line IV-IV of FIG. 4A.
FIGS. 5A and 5B show illustrative implementations of motion of a sample positioning system.
FIG. 6A shows a top view of an illustrative implementation of a calibration sample for calibrating a sample positioning system.
FIG. 6B shows a perspective cross-sectional view of the calibration sample of FIG. 6A taken along line VI-VI of FIG. 6A.
FIG. 6C shows a side cross-sectional view of the calibration sample of FIG. 6A taken along line VI-VI of FIG. 6A.
FIG. 7 shows an illustrative implementation of a calibration sample positioned within a sample positioning system.
FIG. 8 shows an illustrative method for calibrating a sample positioning system.
FIGS. 9A-9C show illustrative implementations of spectral measurements that may be acquired by a spectrometry system including a sample positioning system.
FIG. 10 shows an illustrative implementation of a calibration sample skewed from an expected position in an x-axis and a y-axis.
FIG. 11 shows an illustrative implementation of a calibration sample skewed from an expected position in a z-axis.

### DETAILED DESCRIPTION

Systems and methods are described herein for calibrating a sample positioning system in a spectroscopy system. The sample positioning system is configured to move the sample along an x-axis and a y-axis of the sample positioning system to position the sample for performing the spectral measurements using the spectroscopy system. For example, based on one or more spectral measurements received from the spectroscopy system, a first location associated with a first feature of a calibration sample supported by the sample positioning system. The first location is representative of a coordinate of the first feature along the x-axis and the y-axis of the sample positioning system. Based on one or more additional spectral measurements received from the spectroscopy system, one or more additional locations associated with one or more additional features of the calibration sample are determined. The one or more additional locations are representative of one or more additional coordinates of the one or more additional features in the x-axis and the y-axis of the sample positioning system. Based on the first location and the one or more additional locations, calibration data is generated for calibrating motion of the sample positioning system in the x-axis and the y-axis. In this way, a sample may be positioned accurately for spectral measurement based on the calibration data.

In one example, the calibration data may include calibration values representative of differences associated with the first location relative to a first expected location of the first feature in the x-axis and the y-axis and the one or more additional locations relative to one or more additional expected locations of the one or more additional features in the x-axis and the y-axis.

In some examples, motion of the sample positioning system is further calibrated in a z-axis of the sample positioning system. To illustrate, based on the one or more spectral measurements received from the spectroscopy system, a second location associated with a second feature of the calibration sample supported by the sample positioning system included in the spectroscopy system is determined such that the second location is further representative of the coordinate of the first feature in a z-axis of the sample positioning system. Based on the second location, the calibration data may be generated for calibrating motion of the sample positioning system in the x-axis, the y-axis, and z-axis.

In some examples, multiple first features are included in the calibration sample for calibrating the sample positioning system in the X-Y axes of the sample positioning system. The sample positioning system is configured to translate a sample in the X-Y plane of the sample positioning system. Multiple second features are included in the calibration sample for calibrating the sample positioning system in the Z axis of the sample positioning system. By translating the sample along the Z axis, a distance between the sample and a light source for the spectral measurement is adjusted.

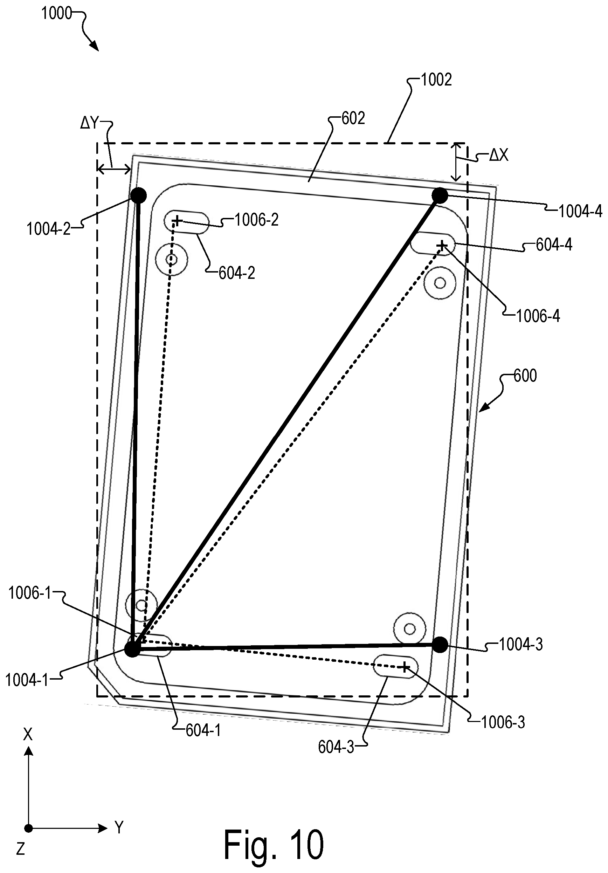

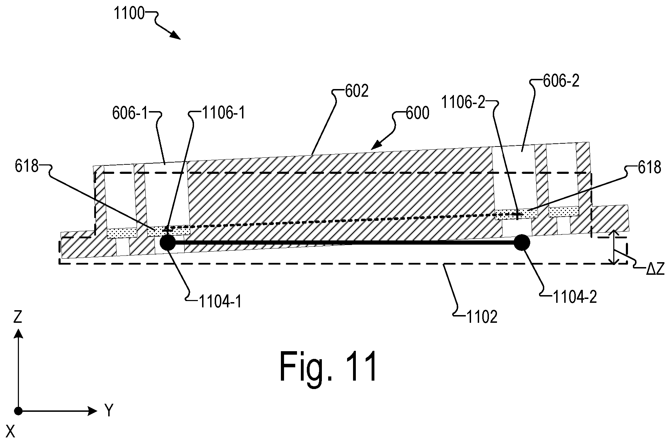

The calibration sample may extend along a length (Y-axis) and a width (X-axis) of a calibration sample plane. In an expected position, X-Y plane of the calibration system is aligned with the X-Y plane of the sample positioning system. However, as shown in FIG. 10 and FIG. 11, the X-Y plane of the calibration sample may be skewed from the X-Y plane of the sample positioning system. The calibration system may be a calibration plate. The plate may be a plate according to the Society for Laboratory Automation and Screening (SLAS) standard.

Each first feature may be positioned close to a corresponding second feature, so that the second location of the second feature is representative of the location/coordinate of the first feature in the z-axis. In some examples, the distance between the first feature and the second feature is within 10 mm. The first feature may include an aperture with a diameter from 0.01 millimeters to 1.5 millimeters. The second feature may include a focal depth-dependent reference material. In some examples, the first features may be the same as the second features, so that the same feature can be used for calibration in all three axes.

The focal depth-dependent reference material emits light at a wavelength range different from the illuminating light. As such, the location of the focal point of the illuminating light relative to the focal depth-dependent reference material can be determined based on the emitted light from the depth-dependent reference material. For example, the focal depth-dependent reference materials generate Raman signals responsive to the irradiation of the illuminating light. With a thin layer of the focal depth-dependent reference material, calibration along the z-axis can be achieved.

In some examples, a non-focal depth-dependent reference material can be added to the features for X-Y calibration, such as the first features, for scattering the illuminating light.

In some examples, the spectroscopy system includes a focusing lens for focusing a light generated from the source to the sample, the location of a focal point of the light along the Z-axis of the sample positioning system is adjusted by adjusting a relative position between the focusing lens and the sample.

In one example, the focusing lens may be motorized. The sample positioning system may move the sample along the X and Y axes, but not in the Z-axis of the sample positioning system. Adjusting a relative position between the focusing lens and the sample includes adjusting the focusing lens via the motor. As such, the sample positioning system is rigid in the Z-axis, which ensures the high accuracy and high resolution of the focal point movement in the Z-axis.

In some examples, the sample positioning system is configured to translate the sample along each of the X, Y, and Z axes of the sample positioning system. The focusing lens for focusing a light generated from the source to the sample may be fixed relative to the sample positioning system. Adjusting a relative position between the focusing lens and the sample includes translating the sample along the Z-axis using the sample positioning system.

In some examples, the first location and the second location correspond to adjacent wells in a plate according to the SLAS standard.

In some examples, the one or more spectral measurements include detecting light emitted from the calibration sample such as light scattered and/or generated from the calibration sample responsive to irradiation. The light emitted from the calibration sample may include Raman characteristics (i.e. Raman signals). Through the spectral measurements, one or more spectra are acquired. In some examples, determining the locations of the calibration sample is based on a peak signal strength of the spectra.

In some examples, the calibration data represent one or more of a skew, an offset, or a scale of the calibration sample associated with the sample positioning system.

In some examples, the sample positioning system is calibrated based on the calibration data, so that the calibrated sample positioning system can perform a measurement procedure on a sample of interest. For example, the measurement procedure may include performing one or more spectral measurements using the calibrated sample positioning system to determine one or more attributes (e.g., identification, structure, chemical bonds, concentrations, etc.) of the sample of interest. In some examples, the calibration data is stored in a data storage device of the sample positioning system such that the calibration data is accessible from the data storage device for calibrating motion of the sample positioning system during the measurement procedure.

In some examples, the calibration sample includes a plate comprising a first set of at least three wells and a second set of at least three wells. Each well of the first set of at least three wells may include an aperture and a non-focal depth-dependent reference material for determining the calibration data associated with the x-axis and the y-axis of the sample positioning system. Each well of the second set of at least three wells may include an aperture and a focal depth-dependent reference material for determining the calibration data associated with the z-axis of the sample positioning system.

In some examples, the calibration sample may be integrated into the sample positioning system. For example, the features of the calibration sample may be imbedded in the sample positioning system. As such, the calibration sample is included in the sample positioning system.

Systems and methods described herein may provide various benefits, which may include one or more advantages over conventional systems and methods for calibrating a sample positioning system. For example, using spectral measurements to calibrate motion of a sample positioning system may allow the sample positioning system to be calibrated more accurately and/or efficiently (e.g., by calibrating motion of the sample positioning system based on locations having a good spectral signal that may correspond to a focal point of the illuminating light) relative to calibrating motion of the sample positioning system based on a visual inspection. Moreover, using spectral measurements to calibrate motion of the sample positioning system may provide more accurate and/or repeatable spectral measurements of a sample using the sample positioning system and reduce variability associated with the sample positioning system (e.g., between different sample positioning systems).

Various embodiments will now be described in more detail with reference to the figures. The systems and methods described herein may provide one or more of the benefits mentioned above and/or various additional and/or alternative benefits that will be made apparent herein.

In some implementations, the systems and methods for calibrating a sample positioning system, as described herein, may be used in conjunction with a Raman spectrometry system. As such, a Raman spectrometry system will now be described. However, the described Raman spectrometry system is illustrative and not limiting. The systems and methods described herein may operate as part of or in conjunction with the Raman spectrometry system described herein and/or with any other suitable optical spectrometry system, including an infrared spectrometry system, an ultra-violet spectrometry system, or an optical emission spectrometer.

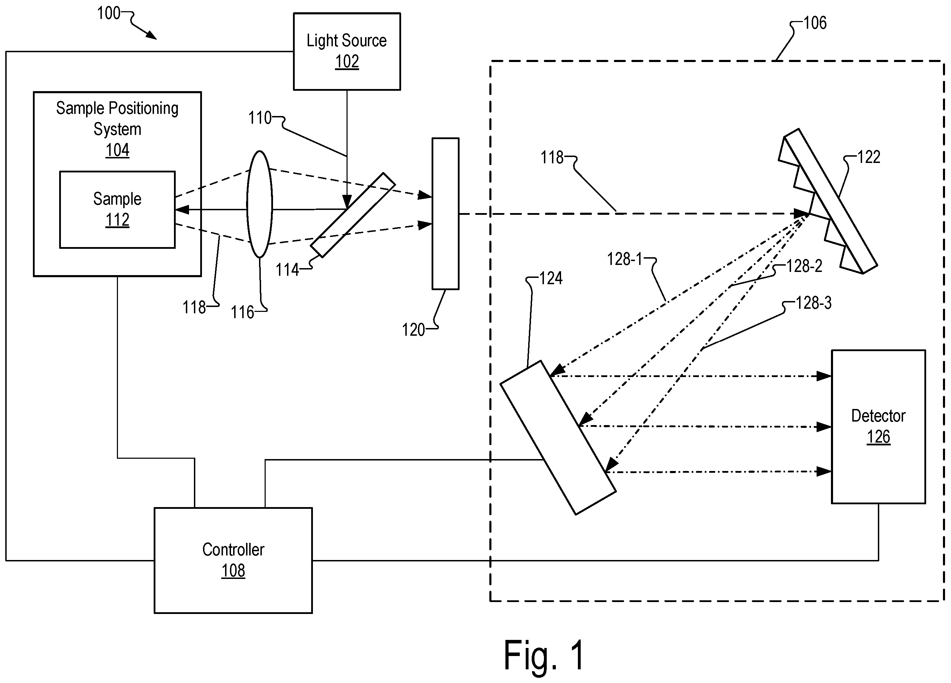

FIG. 1 shows an illustrative Raman spectrometry system 100 ("spectrometry system 100"). Spectrometry system 100 includes a light source 102, a sample positioning system 104, a spectrometer 106, and a controller 108. Spectrometry system 100 may include additional or alternative components as may serve a particular implementation. In some examples, spectrometry system 100 is implemented as a microscope, such as a Raman microscope.

Light source 102 is configured to generate light 110 for illuminating a sample 112 stored within sample positioning system 104. In some examples, light 110 generated by light source 102 includes a monochromatic light (e.g., light having a substantially constant wavelength and/or frequency), such as light in the visible range (e.g., light having wavelengths from about 380 nanometers (nm) to about 700 nm), near infrared range (e.g., light having wavelengths from about 700 nm to about 2500 nm), and/or near ultraviolet range (e.g., light having wavelengths from about 200 nm to about 400 nm. Light source 102 is implemented by any suitable light source configured to generate light 110, such as a laser (e.g., a continuous wave laser, a pulsed laser, etc.) including, but not limited to, a 780 nm diode laser, a 633 nm HeNe laser, and/or a 532 nm solid state laser.

In some examples, light 110 generated by light source 102 is manipulated by one or more optical devices to direct light 110 toward sample 112 within sample positioning system 104. As shown, light 110 generated by light source 102 is directed toward a beam splitter 114 configured to split light 110 into a transmitted beam portion and a reflected beam portion. The transmitted beam portion is directed toward a focusing lens 116 configured to focus the transmitted beam portion toward sample 112. Still other suitable optical devices may be used to manipulate light 110 toward sample 112, such as one or more of a filter (e.g., a laser filter, a notch filter, a tunable filter, an edge filter, a neutral density filter, etc.), a lens (e.g., a focusing lens, a collimating lens, a collection lens, etc.), or a mirror.

Sample positioning system 104 is configured to receive sample 112. Sample 112 is configured to store one or more analytes for detection and analysis by spectrometry system 100. Sample positioning system 104 may further be configured to position sample 112 relative to light 110 (e.g., a focal point of light 110) to cause the one or more analytes within sample 112 to be illuminated by light 110. To illustrate, sample positioning system 104 may be configured to support one or more samples 112, each storing one or more analytes at one or more locations within sample positioning system 104, and move the one or more locations (e.g., leftward, rightward, frontward, backward, toward, and/or away) relative to one or more optical devices (e.g., focusing lens 116) and/or light source 102 such as to position the one or more analytes stored by the one or more samples 112 at a focal point of light 110 (e.g., to excite molecular bonds of the one or more analytes at the one or more locations). In some instances, sample 112 includes a plurality of features such that sample positioning system 104 may be configured to store each analyte at a distinct location within sample positioning system 104. Accordingly, sample positioning system 104 may be configured to move sample 112 at the distinct locations to sequentially align each analyte of interest with light 110 to perform a spectral measurement of each analyte of interest.

As an illustrative example, sample 112 may be implemented as a plate having a first feature configured to store a first analyte at a first location and a second feature configured to store a second analyte at a second location spaced away from the first location. Sample positioning system 104 may be configured to support a sample 112 and move to align the first location with light 110 to cause illumination of the first analyte stored at the first feature and perform a spectral measurement associated with the first analyte. Sample positioning system 104 may then be moved to align the second location with light 110 to cause illumination of a second analyte stored at the second feature and perform a spectral measurement associated with the second analyte. Sample positioning system 104 may continue to move sample 112 to illuminate additional analytes of interest. Example motions of sample positioning system 104 are described in more detail below. Moreover, while FIG. 1 shows that sample positioning system 104 is separate from optical devices (e.g., beam splitter 114 and focusing lens 116) and light source 102, one or more optical devices (e.g., beam splitter 114 and focusing lens 116) and/or light source 102 may alternatively be included in whole or in part within sample positioning system 104.

The one or more analytes stored by sample 112 may include, for example, chemical analytes (e.g., molecules, ions, etc.) and/or biological analytes (e.g., metabolites, proteins, lipids, etc.), for detection and analysis by spectrometry system 100. To illustrate, when sample 112 is illuminated by light 110, molecular bonds in the one or more analytes of sample 112 are excited by light 110 and in response emit scattered light 118 (e.g., by Raman scattering) having a plurality of wavelengths that are shifted to a different wavelength than illuminating light 110. Based on the shift in wavelengths and/or frequencies of scattered light 118 emitted from sample 112 relative to illuminating light 110 received by sample 112, spectrometry system 100 may determine one or more attributes (e.g., identification, structure, chemical bonds, concentrations, etc.) of the one or more analytes included in sample 112.

Accordingly, scattered light 118 is directed toward spectrometer 106 for detection and analysis of scattered light 118. In some examples, scattered light 118 emitted from sample 112 is directed to spectrometer 106 by one or more optical devices that may include the same optical devices used to direct light 110 towards sample 112 and/or additional optical devices. As shown, focusing lens 116 is configured to focus scattered light 118 toward a filter 120 configured to allow scattered light 118 having a desired wavelength range, such as wavelengths outside of the wavelength included in light 110, to pass through filter 120 to spectrometer 106. Still other suitable optical devices may be used to direct at least a portion of scattered light 118 toward spectrometer 106, such as one or more of a beam splitter, a filter (e.g., a laser filter, a notch filter, a tunable filter, an edge filter, a neutral density filter, etc.), a lens (e.g., a focusing lens, a collimating lens, a collection lens, etc.), a mirror.

As shown, spectrometer 106 includes grating 122, a wavelength filter 124, and a detector 126. Grating 122 is implemented by any suitable grating (e.g., holographic gratings, transmission gratings, reflection gratings, etc.) or other dispersive element configured to disperse scattered light 118 into a plurality of component wavelengths 128 (e.g., wavelengths 128-1 through 128-3) included in scattered light 118. Each wavelength 128 may include a particular wavelength and/or a continuous range of wavelengths included in scattered light 118. Grating 122 is further configured to direct the plurality of separated wavelengths 128 toward wavelength filter 124. For example, the plurality of wavelengths 128 of scattered light 118 separated by grating 122 are directed from grating 122 in different directions (e.g., at different angles) such that each wavelength 128 included in the plurality of wavelengths 128 is received at a different region of wavelength filter 124 relative to other wavelengths 128.

Wavelength filter 124 is configured to receive the plurality of wavelengths 128 and selectively direct one or more wavelengths of interest (e.g., one or more wavelengths useful in determining one or more attributes of the one or more analytes in sample 112) included in the plurality of wavelengths 128 toward detector 126, while filtering the remaining wavelengths included in the plurality of wavelengths 128 (e.g., the filtered wavelengths are not directed toward detector 126). Wavelength filter 124 may be implemented by a digital micromirror device (DMD), a liquid crystal filter, or any other suitable filter device configured to selectively direct wavelengths 128 of scattered light 118 toward detector 126.

Detector 126 is configured to receive light directed toward detector 126 by wavelength filter 124 and detect or measure an intensity of light at each wavelength 128 received by detector 126. Detector 126 may be implemented by any suitable optical detector, such as, but not limited to, one or more of a photodiode, a Charge Coupled Device (CCD), or a single channel detector. Detector 126 may further be configured to generate a signal representative of intensity of light at wavelengths 128 detected by detector 126 and output the signal to controller 108. The detector 126 may detect Raman signals.

Spectrometer 106 may include additional or alternative components as may serve a particular implementation, such as one or more optical devices (e.g., an entrance slit, a lens, a filter, a mirror, etc.) configured to direct light toward grating 122, wavelength filter 124, and/or detector 126. As an illustrative example, spectrometer 106 may include a collimating lens configured to direct light to grating 122, a focusing lens configured to direct light to wavelength filter 124, and/or a collection lens configured to direct light to detector 126.

Controller 108 may be communicatively coupled with and configured to control operations of light source 102, sample positioning system 104, wavelength filter 124, and detector 126. For example, controller 108 may be configured to control operation of various hardware components included in light source 102, sample positioning system 104, wavelength filter 124, and detector 126. To illustrate, controller 108 may be configured to control one or more parameters (e.g., intensity, wavelength, frequency, timing, etc.) of light 110 generated and emitted by light source 102 and/or motion of sample positioning system 104 to align sample 112 with light 110 for illumination. Controller 108 may further be configured to selectively control wavelengths 128 of scattered light 118 filtered by wavelength filter 124, receive the signal output by detector 126, and/or determine one or more attributes of the one or more analytes included in sample 112 based on the signal received by detector 126.

Controller 108 may also include and/or provide a user interface configured to enable interaction between a user of sample positioning system 104, spectrometer 106 and/or controller 108. The user may interact with controller 108 via the user interface by tactile, visual, auditory, and/or other sensory type communication.

Controller 108 may include any suitable hardware (e.g., a processor, circuitry, etc.) and/or software as may serve a particular implementation. While FIG. 1 shows that controller 108 is separate from sample positioning system 104 and spectrometer 106, controller 108 may alternatively be included in whole or in part within sample positioning system 104 and/or spectrometer 106. In some examples, controller 108 includes a computing device communicatively coupled to sample positioning system 104 and/or spectrometer 106 by way of a wired connection (e.g., a cable), a wireless connection, and/or a network (e.g., a local area network, a wireless network (e.g., Wi-Fi), a wide area network, the Internet, a cellular data network, etc.).

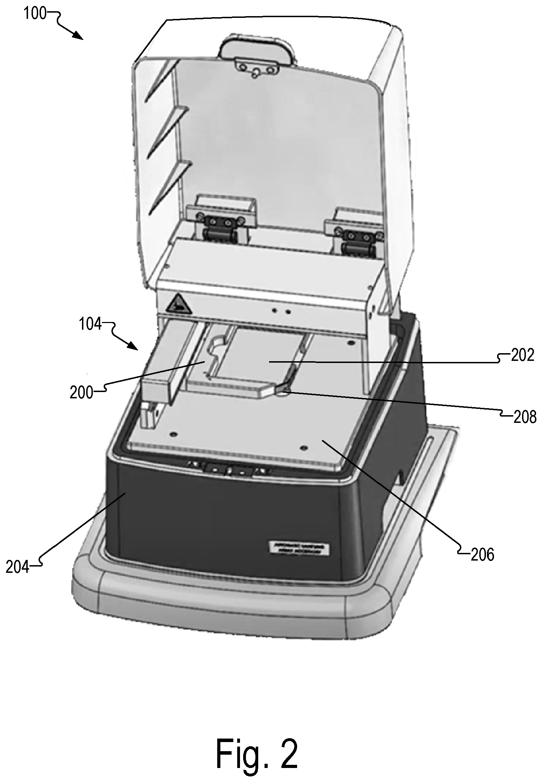

FIG. 2 shows an illustrative implementation of sample positioning system 104 within a spectroscopy system 100. As shown, sample positioning system 104 includes a sample support 200 having a recess 202 formed therein and configured to receive a sample (e.g., sample 112) for storing one or more analytes. Sample positioning system 104 further comprises a base plate 206 and an opening 208 formed therethrough. The sample positioning system 104 includes a first actuator for translating sample support 200 in the x-axis of sample positioning system 104, and a second actuator for translating sample support 200 in the y-axis of sample positioning system 104. In some examples, the sample positioning system 104 can only translate the sample in the X-Y plane, but not the z-axis of sample positioning system 104. In some example, the sample positioning system 104 can translate the sample along each of the X,Y and Z axes of the sample positioning system. Sample positioning system 104 is configured to receive and direct light (e.g., light 110) generated by a light source (e.g., light source 102) through opening 208 toward sample support 200 (and a sample 112 supported by sample support 200). In some examples, base 204 of the spectroscopy system 100 may house one or more optical devices (e.g., beam splitter 114 and focusing lens 116) such that base 204 may be configured to receive the light generated by the light source and direct the light through opening 208 toward sample support 200.

Sample positioning system 104 is configured to move sample support 200 relative to base plate 206 (e.g., sample support 200 may move leftward, rightward, frontward, backward, toward, and/or away from base plate 206) such as to align various locations of sample support 200 (and a sample 112 supported by sample support 200) with opening 208. Sample positioning system 104 may include additional or alternative components as may serve a particular implementation, such as one or more motors configured to move sample support 200 relative to opening 208 and/or a controller configured to cause motion of sample support 200 relative to opening 208. Additionally or alternatively, sample support 200 may be integral with a sample such that sample support 200 is configured to receive one or more analytes directly (e.g., without receiving a separate sample 112). In some examples, the sample support may be integral with the sample positioning system.

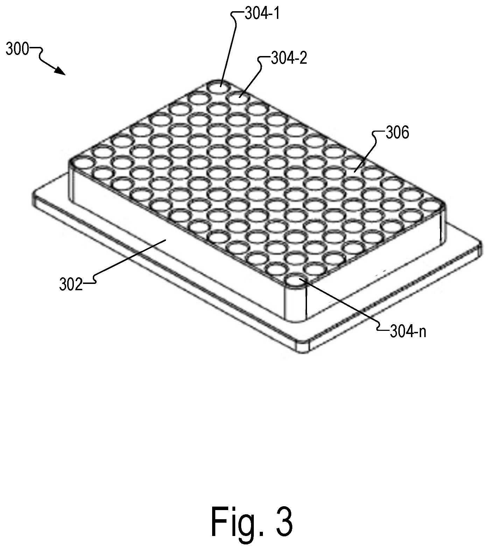

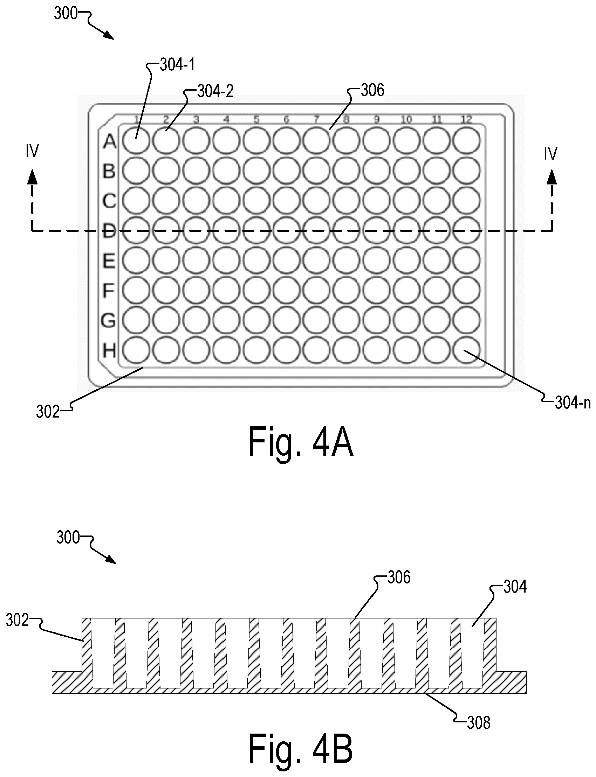

FIGS. 3-4B show an illustrative implementation 300 of a sample that may implement or be similar to sample 112 for use with sample positioning system 104. For example, FIG. 3 shows a perspective view of sample 300, FIG. 4A shows a top view of sample 300, and FIG. 4B shows a cross-sectional view of sample 300 taken along line IV-IV of FIG. 4A.

As shown, sample 300 is implemented by a sample plate 302 having a plurality of wells 304 (e.g., wells 304-1 through 304-n) formed therein. Each well 304 is formed by an opening that extends from a top surface 306 of sample plate 302 toward a bottom surface 308 of sample plate 302. Accordingly, each well 304 is configured to receive and retain one or more analytes within each well 304. At least a portion of sample plate 302 (e.g., at least portions of sample plate 302 extending wells 304 to bottom surface 308) may be made from any suitable material (e.g., polypropylene, polycarbonate, etc.) configured to allow light (e.g., light 110 and/or scattered light 118) to pass through sample plate 302 toward and/or from wells 304 (e.g., to illuminate and/or emit light from one or more analytes stored within wells 304).

As shown in FIG. 4A, wells 304 of sample 300 are arranged in a grid configuration forming a plurality of rows (e.g., indicated by letters A through H) and columns (e.g., indicated by numbers 1 through 12). In some examples, wells 304 of sample 300 are arranged according to a standard grid configuration, such as an SLAS standard (e.g., wells 304 are formed within sample 300 according to one or more predefined parameters, such as one or more of a standard number of wells 304, diameter of wells 304, depth of wells 304, spacing between wells 304, spacing from edges of sample 300, tolerances associated with wells 304, ratios between rows and columns of wells 304, etc.). As an illustrative example, wells 304 of sample 300 are arranged according to an SLAS standard for a well plate having 96 wells (e.g., wells 304 are arranged into 8 rows and 12 columns and spaced at about 9 millimeters (mm) apart from center-to-center). Wells 304 may alternatively be arranged according to any other suitable SLAS standard, such as for one or more well plates having 6 wells, 12 wells, 24 wells, 48 wells, 96 wells, 192 wells, 384 wells, 768 well, 1536 wells, etc. Accordingly, wells 304 are spaced apart such that each well 304 may be configured to store an analyte at a distinct location relative to another analyte stored in another well 304.

Still other suitable standards, configurations, and/or parameters of wells 304 may be used for sample 300. For example, wells 304 may have any shape (e.g., round, rectangular, square, etc.) and arranged into any number of rows and/or columns. In some examples, the arrangement of wells 304 on sample 300 may be customizable and/or designated based on user input (e.g., wells 304 may be arranged in a non-standard configuration). To illustrate, a user may interact with a user interface (e.g., associated with controller 108) to designate the arrangement and/or locations of wells 304 on sample 300. Moreover, sample 300 may include other suitable features (e.g., beads, etc.) for storing samples 112 in addition to or instead of wells 304 and/or sample 300 may include another suitable type of sample holder instead of sample plate 302.

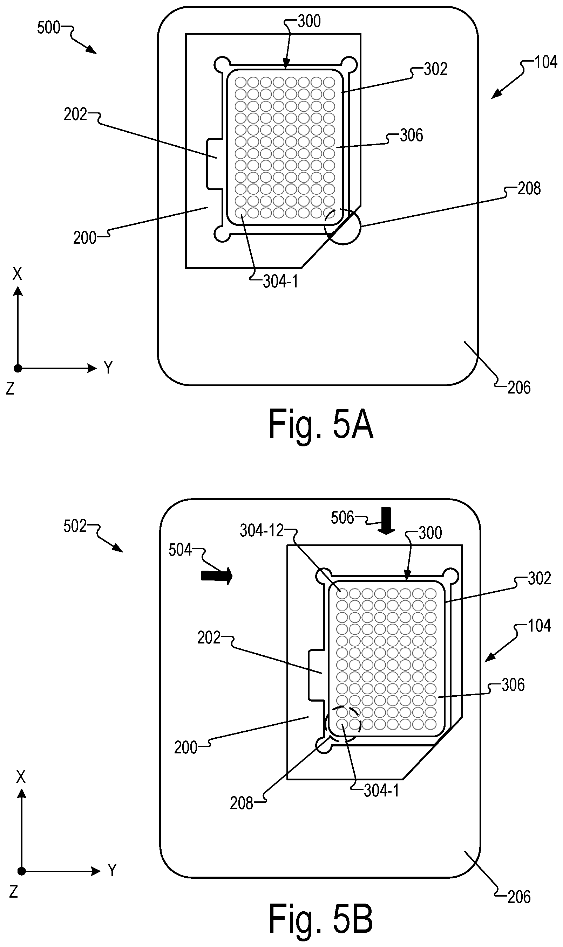

FIGS. 5A and 5B show illustrative implementations of motion of a calibrated sample positioning system 104 for spectral measurements on analytes held with a SLAS plate (e.g., sample 300). The X, Y, Z coordinates are the coordinates of sample positioning system 104. For example, FIG. 5A shows an illustrative implementation 500 in which sample 300 is positioned within sample positioning system 104. As shown, sample 300 is received within recess 202 of sample support 200 with top surface 306 of sample 300 facing outward so as to allow one or more wells 304 of sample 300 to receive one or more analytes. Sample support 200 may receive sample 300 while sample support 200 is in an initial position (e.g., sample support 200 is positioned toward a left edge and back edge of base plate 206 with no wells 304 of sample 300 aligned with opening 208 of base plate 206).

Sample support 200 of sample positioning system 104 is configured to move based on calibration data to align one or more wells 304 with opening 208 of base plate 206 such as to cause one or more analytes stored within the one or more wells 304 to be illuminated with light (e.g., light 110) to perform spectral measurements of the one or more analytes of sample 300. To illustrate, FIG. 5B shows an illustrative implementation 502 of sample support 200 moved to align a first well 304-1 with opening 208. For example, sample support 200 moved from the initial position along a y-axis (e.g., rightward), as indicated by arrow 504, and along an x-axis (e.g., forward), as indicated by arrow 506, relative to base plate 206 to cause sample 300 to move to align first well 304-1 with opening 208 (e.g., a center of first well 304-1 is aligned with a focal point of light 110). When first well 304-1 is aligned with opening 208, sample positioning system 104 may be configured to direct light 110 through opening 208 toward first well 304-1 to illuminate the one or more analytes stored within first well 304-1 and emit scattered light 118 from the one or more analytes stored within first well 304-1 back through opening 208 (e.g., to be detected by detector 126).

Accordingly, sample positioning system 104 is configured to move sample support 200 and/or sample 300 leftward and/or rightward relative to base plate 206 along a y-axis as well as frontward and/or backward relative to base plate 206 along an x-axis such as to align any respective well 304 of sample 300 with opening 208 for illumination. Still other suitable configurations for motion of sample positioning system 104 (e.g., to move sample support 200 and/or sample 300) may be used.

Sample positioning system 104 may be configured to move sample support 200 to align another well 304 of sample 300 with opening 208 such as to illuminate another analyte with light 110. To illustrate, sample positioning system 104 may move sample support 200 from a first position in which first well 304-1 (e.g., located in row A and column 1) of sample 300 is aligned with opening 208 backward along the x-axis to a second position in which another well 304-12 (e.g., located in row A and column 12) of sample 300 is aligned with opening 208. To move from the first position to the second position, sample positioning system 104 may move sample support 200 and/or sample 300 a distance along the x-axis corresponding to an expected distance between first well 304-1 and the other well 304-12. Sample positioning system 104 may be further configured to move along the x-axis and the y-axis to additional positions in which additional wells 304 are aligned with opening 208.

Motion of sample positioning system 104 has been calibrated to sufficiently position sample support 200 and/or sample 300 in alignment with opening 208 such as to provide accurate spectral measurements. For example, in instances where motion of sample positioning system 104 (e.g., sample support 200 and/or sample 300) may not correspond to the expected distances and/or locations between wells 304 such as due to variances (e.g., manufacturing variability) between sample positioning systems 104 and/or the focal point of the light directed toward wells 304 by sample positioning system 104 may not correspond to an expected location of the focal point such as due to the variances between sample positioning systems 104, motion of sample positioning system 104 is calibrated.

In some examples, motion of sample positioning system 104 is calibrated using a sample (e.g., sample 300) and/or a calibration sample. To illustrate, the calibration sample may be inserted within sample positioning system 104 to calibrate motion of sample positioning system 104 and then removed from sample positioning system 104 such as to allow a sample (e.g., sample 300) to be inserted within sample positioning system 104 for storing one or more analytes and performing spectral measurements of the sample (e.g., the one or more analytes stored by the sample).

In some examples, the calibration sample may be integrated into the sample positioning system. For example, the features may be positioned at corners of the sample support for calibrating the sample positioning system. As such, no additional calibration sample separated from the sample positioning system is needed.

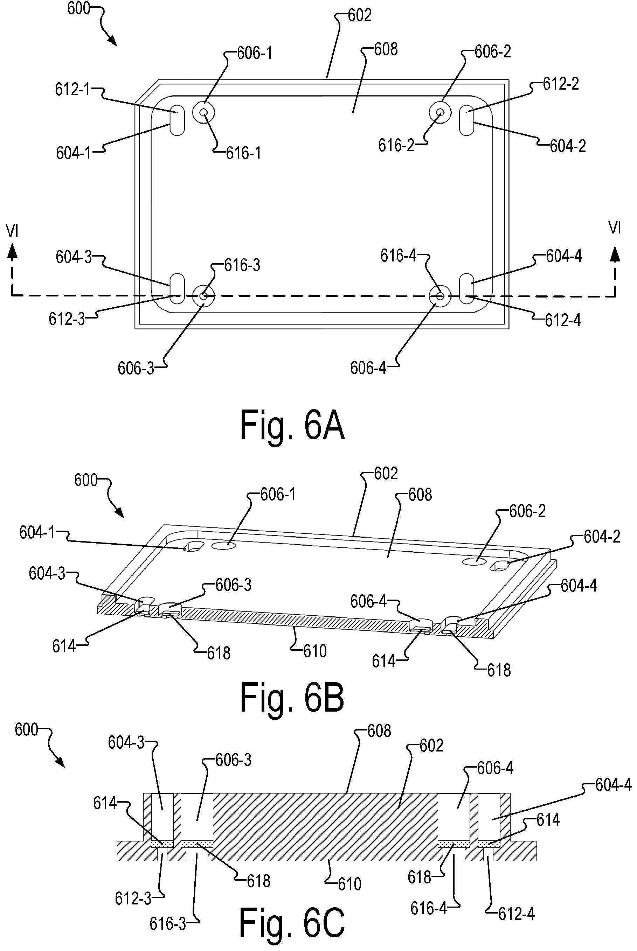

FIGS. 6A-6C show an illustrative implementation 600 of a calibration sample for calibrating motion of sample positioning system 104. For example, FIG. 6A shows a top view of calibration sample 600, FIG. 6B shows a perspective cross-sectional view of calibration sample 600 taken along line VI-VI of FIG. 6A, and FIG. 6C shows a side cross-sectional view of calibration sample 600 taken along line VI-VI of FIG. 6A.

As shown, calibration sample 600 is implemented as a calibration plate 602 that is configured to be received within recess 202 of sample support 200. For example, calibration plate 602 may be the same size of a plate according to an SLAS standard. Calibration plate 602 comprises a first set of non-depth-dependent wells 604 (e.g., non-depth-dependent wells 604-1 through 604-4) and a second set of depth-dependent wells 606 (e.g., depth-dependent wells 606-1 through 606-4) extending within calibration plate 602. Each well included in the first set of non-depth-dependent wells 604 is formed by an opening extending from a top surface 608 of calibration plate 602 toward a bottom surface 610 of calibration plate 602. Each well included in the first set of non-depth-dependent wells 604 includes a first aperture 612 (e.g., first apertures 612-1 through 612-4) extending from each non-depth-dependent well 604 to bottom surface 610 of calibration plate 602. In the illustrated example, each first aperture 612 is sized smaller than each non-depth-dependent well 604 included in the first set of non-depth-dependent wells 604. In some examples, each first aperture 612 may be sized based on an amplitude of a wavelength of light to be transmitted through first aperture 612 and/or based on a size of wells (e.g., wells 304) to be used with sample positioning system 104 for storing samples. In some examples, each first aperture 612 includes a diameter from about 0.01 mm to about 1.5 mm, such as about 0.2 mm.

Each well included in the first set of non-depth-dependent wells 604 further includes a non-focal depth-dependent reference material 614 (e.g., polystyrene, etc.). For example, non-focal depth-dependent reference material 614 may be configured to emit scattered light (e.g., scattered light 118) when non-focal depth-dependent reference material 614 is illuminated with light (e.g., light 110) independent of a depth of calibration plate 602 relative to a focal point of the light (e.g., calibration plate 602 may be located at any position along the z-axis relative to base plate 206 for non-focal depth-dependent reference material 614 to emit scattered light 118). Accordingly, non-focal depth-dependent reference material 614 included in the first set of non-depth-dependent wells 604 may be used to calibration motion of sample positioning system 104 along the x-axis and the y-axis (e.g., independent of the z-axis).

In the illustrated example, the first set of non-depth-dependent wells 604 includes four wells located at different corners of calibration plate 602. Additionally or alternatively, each well included in the first set of non-depth-dependent wells 604 may correspond to wells in a plate according to an SLAS standard. For example, a first non-depth-dependent well 604-1 may be located at a first corner of calibration plate 602 to correspond to a well 304 of sample 300 in row A and column 1. A second non-depth-dependent well 604-2 may be located at a second corner of calibration plate 602 to correspond to a well 304 of sample 300 in row A and column 12. A third non-depth-dependent well 604-3 may be located at a third corner of calibration plate 602 to correspond to a well 304 of sample 300 in row H and column 1. A fourth non-depth-dependent well 604-4 may be located at a fourth corner of calibration plate 602 to correspond to a well 304 of sample 300 in row H and column 12. Such placement of wells included in the first set of non-depth-dependent wells 604 may allow motion of sample positioning system 104 to be calibrated along an entire surface of calibration sample 600 and/or sample 300. Still other suitable configurations (e.g., spacing, size, locations, etc.) of wells included in the first set of non-depth-dependent wells 604 may be used to sufficiently calibrate motion of sample positioning system 104 between the wells. For example, at least two wells (e.g., located at opposing corners of calibration plate 602) may be used and/or at least three wells (e.g., located at three different corners of calibration plate 602) may be used.

Likewise, each well included in the second set of depth-dependent wells 606 is formed by an opening extending from a top surface 608 of calibration plate 602 toward a bottom surface 610 of calibration plate 602. Each well included in the second set of depth-dependent wells 606 includes a second aperture 616 (e.g., second apertures 616-1 through 616-4) extending from each well to bottom surface 610 of calibration plate 602. In the illustrated example, each second aperture 616 is sized smaller than each depth-dependent well 606 included in the second set of depth-dependent wells 606. In some examples, each second aperture 616 may be sized based on an amplitude of a wavelength of light to be transmitted through second aperture 616 and/or based on a size of wells 304 to be used with sample positioning system 104. Moreover, each second aperture 616 may be sized larger than each first aperture 612 in the first set of non-depth-dependent wells 604.

Each well included in the second set of depth-dependent wells 606 further includes a focal depth-dependent reference material 618 (e.g., silicon, silicon dioxide, etc.). For example, focal depth-dependent reference material 618 may be configured to emit scattered light (e.g., scattered light 118) when focal depth-dependent reference material 618 is illuminated with light (e.g., light 110) based on a depth of calibration plate 602 relative to a focal point of the light (e.g., calibration plate 602 is positioned at a particular position along the z-axis relative to base plate 206 for focal depth-dependent reference material 618 to emit scattered light). Accordingly, focal depth-dependent reference material 618 included in the second set of depth-dependent wells 606 may be used to calibration motion of sample positioning system 104 along the z-axis.

In the illustrated example, the second set of depth-dependent wells 606 includes four wells located at different corners of calibration plate 602 and offset from a respective well of the first set of non-depth-dependent wells 604. For example, each well included in the second set of depth-dependent wells 606 may be offset from a respective well included in the first set of non-depth-dependent wells 604 within a distance of about 10 mm. Additionally or alternatively, each well included in the second set of depth-dependent wells 606 may correspond to adjacent wells in a plate according to an SLAS standard. To illustrate, a first depth-dependent well 606-1 may be located at the first corner of calibration plate 602 to correspond to a well 304 of sample 300 in row A and column 2. A second depth-dependent well 606-2 may be located at the second corner of calibration plate 602 to correspond to a well 304 of sample 300 in row A and column 11. A third depth-dependent well 606-3 may be located at the third corner of calibration plate 602 to correspond to a well 304 of sample 300 in row H and column 2. A fourth depth-dependent well 606-4 may be located at the fourth corner of calibration plate 602 to correspond to a well 304 of sample 300 in row H and column 11.

Such placement of wells included in the second set of depth-dependent wells 606 may allow motion of sample positioning system 104 to be calibrated along the z-axis along with the x-axis and y-axis associated with the first set of non-depth-dependent wells 604. In some examples, the location of each well included in the second set of depth-dependent wells 606 along the z-axis may correspond to the location of a respective well included in the first set of non-depth-dependent wells 604 along the z-axis (e.g., the location of first non-depth-dependent well 604-1 may be calibrated along the z-axis based on the location of first depth-dependent well 606-1 along the z-axis).

Still other suitable configurations (e.g., spacing, size, locations, etc.) of wells included in the second set of depth-dependent wells 606 may be used to sufficiently calibrate motion of sample positioning system 104. For example, at least two wells (e.g., located at opposing corners of calibration plate 602) may be used or at least three wells (e.g., located at three different corners of calibration plate 602) may be used. Additionally or alternatively, at least a portion of wells included in the second set of depth-dependent wells 606 may overlap with at least a portion of respective wells included in the first set of non-depth-dependent wells 604. To illustrate, non-focal depth-dependent reference material 614 and focal depth-dependent reference material 618 may be provided in the same well such that only one set of wells may be provided. Alternatively, the second set of depth-dependent wells 606 including focal depth-dependent reference material 618 may be omitted from calibration sample 600 (e.g., in instances when motion of sample positioning system 104 is calibrated without respect to the z-axis). In some examples, calibration sample 600 may include other suitable features for providing non-focal depth-dependent reference material 614 and/or focal depth-dependent reference material 618 in addition to or instead of the first set of non-depth-dependent wells 604 and/or the second set of depth-dependent wells 606. Moreover, calibration sample 600 may include other suitable types of sample holders instead of calibration plate 602.

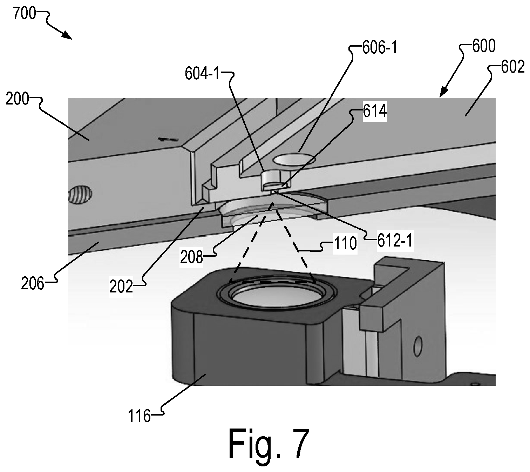

As an illustrative example, FIG. 7 shows an implementation 700 of calibration sample 600 positioned within sample support 200 of sample positioning system 104. As shown, sample support 200 is positioned to align a first non-depth-dependent well 604-1 included in the first set of non-depth-dependent wells 604 with opening 208 in base plate 206. Accordingly, light 110 transmitted through opening 208 by focusing lens 116 is configured to be focused through first aperture 612-1 of first non-depth-dependent well 604-1 toward non-focal depth-dependent reference material 614. Non-focal depth-dependent reference material 614 may be configured to emit scattered light in response to being illuminated with light 110 that may be detected (e.g., by detector 126). Sample support 200 may further be moved to align a first depth-dependent well 606-1 included in the second set of depth-dependent wells 606 with opening 208 in base plate 206. Accordingly, light 110 transmitted through opening 208 by focusing lens 116 is configured to be focused through second aperture 616-1 of first depth-dependent well 606-1 toward focal depth-dependent reference material 618. Focal depth-dependent reference material 618 may be configured to emit scattered light in response to being illuminated with light 110 that may be detected (e.g., by detector 126), such as when focal depth-dependent reference material 618 is positioned at a desired distance (e.g., at the focal point of light 110) along the z-axis relative to base plate 206 and/or focusing lens 116.

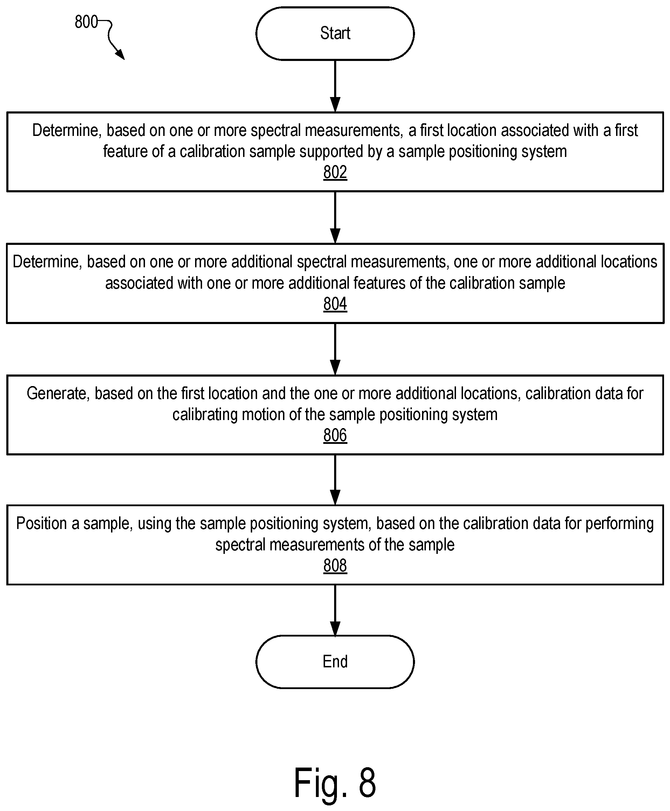

FIG. 8 shows an illustrative method 800 of calibrating a sample positioning system (e.g., sample positioning system 104) of a spectroscopy system (e.g., spectroscopy system 100) using spectral measurements. While FIG. 8 shows illustrative operations according to one embodiment, other embodiments may omit, add to, reorder, and/or modify any of the operations shown in FIG. 8. One or more of the operations shown in FIG. 8 may be performed by spectrometry system 100, sample positioning system 104, any components included therein, and/or any implementations thereof.

As shown, method 800 includes, at operation 802, determining, based on one or more spectral measurements output by the spectroscopy system, a first location associated with a first feature of a calibration sample (e.g., calibration sample 600) supported by the sample positioning system. The first feature of the calibration sample may include one or more of a well (e.g., a non-depth-dependent well 604 and/or a depth-dependent well 606), an aperture (e.g., first aperture 612 and/or second aperture 616), or a focal point (e.g., associated with non-focal depth-dependent reference material 614 and/or focal depth-dependent reference material 618). In some examples, the first feature includes a center of a well of a plate according to an SLAS standard. The first location is a location relative to the sample positioning system.

The sample positioning system (e.g., sample support 200) is configured to translate the calibration sample along an x-axis and an y-axis of the sample positioning system to position the calibration sample for performing the one or more spectral measurements to determine the first location of the first feature. For example, the first location is representative of a coordinate of the first feature along the x-axis and the y-axis of the sample positioning system. The first location may be determined based on a peak signal strength of the one or more spectral measurements associated with the first feature. For example, the first location is the location where the strongest peak signal strength is detected. In some examples, the peak signal strength may be determined using an algorithm, such as a simplex algorithm.

As an illustrative example, the first feature of the calibration sample may have a first expected location (e.g., along the x-axis and the y-axis of the sample positioning system). The first expected location may be determined based on geometry of the calibration sample, such as the SLAS standard, and/or designated by a user input. The sample positioning system may be moved to align the first expected location of the first feature with an opening (e.g., opening 208) of the sample positioning system configured to direct light (e.g., light 110) toward the calibration sample. To illustrate, the first feature may include first non-depth-dependent well 604-1 such that the expected location of the center of first non-depth-dependent well 604-1 is positioned along the x-axis and the y-axis within an expected focal point of the light. The spectrometry system may perform a spectral measurement associated with the first feature at the first expected location. To illustrate, the spectrometry system may generate light that is directed through the opening of the sample positioning system to illuminate non-focal depth-dependent reference material 614 within first non-depth-dependent well 604-1. In instances where the first feature (e.g., first non-depth-dependent well 604-1) is sufficiently aligned with the focal point of the light at the first expected location, the light generated by the spectrometry system illuminates material (e.g., non-focal depth-dependent reference material 614) associated with the first feature such that the material may be configured to emit light (e.g., scattered light) that may be detected by a detector (e.g., detector 126) of the spectrometry system to acquire a spectral signal. Alternatively, in instances where the first feature is misaligned with the opening and/or a focal point of the light at the first expected location, the light generated by the spectrometry system may not illuminate the material associated with the first feature such that no spectral signal may be acquired and/or the light generated by the spectrometry system may not sufficiently illuminate the material associated with the first feature such that the light emitted by the material may provide a weak spectral signal (e.g., having a small peak).

The sample positioning system may further be moved in increments along the x-axis and/or the y-axis to move the first feature relative to the opening about the first expected location and one or more spectral measurements may be performed by the spectrometry system to acquire a spectral signal associated with the first feature at each increment. To illustrate, the sample positioning system may be moved to position the first feature of the calibration sample about the first expected location in increments according to a pattern (e.g., a box pattern, a circular pattern, a zig-zag pattern, etc.). At each increment, a spectral measurement may be performed to acquire a spectral signal at each increment. A peak signal strength (e.g., a peak amplitude and/or centroid) of each spectral signal may be determined for each spectral measurement associated with the first feature. A spectral signal having a maximum peak signal strength (e.g., a peak signal strength higher than another spectral signal) may correspond to the first feature being properly aligned with the opening and/or a focal point of light being transmitted through the opening of the sample positioning system. Accordingly, the first location of the first feature may be determined based on the position of the sample positioning system in which a spectral signal having a higher peak signal strength relative to another peak signal strength was acquired. For example, the first location may be representative of a coordinate along the x-axis and the y-axis corresponding to a location of the calibration sample aligned with the opening and/or the focal region of the light. In some examples, the first location may include a distance (e.g., along the x-axis and/or the y-axis) that the first location is offset relative to the first expected location.

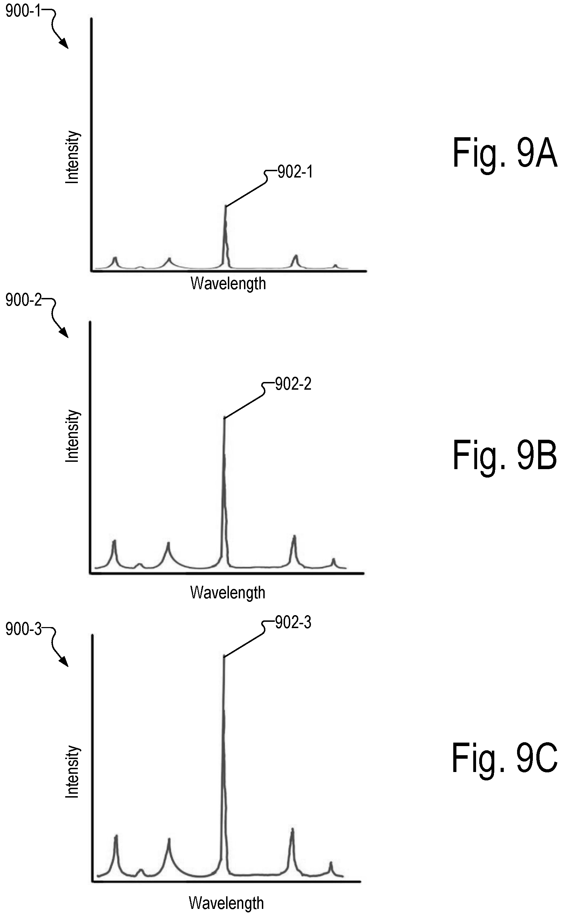

As an illustrative example, FIGS. 9A-9C show illustrative spectral signals 900 (e.g., spectral signals 900-1 through 900-3) associated with a first feature of a calibration sample that may be acquired by the spectrometry system. As shown, FIG. 9A depicts a first spectral signal 900-1 having a first peak signal strength 902-1 such as at a centroid of spectral signal 900. FIG. 9B depicts a second spectral signal 900-2 having a second peak signal strength 902-2 that is higher than the first peak signal strength 902-1. For example, second spectral signal 900-2 may be acquired after moving the sample positioning system in an increment relative to a position of the sample positioning system in which first spectral signal 900-1 was acquired. FIG. 9C depicts a third spectral signal 900-3 having a third peak signal strength 902-3 that is higher than the second peak signal strength 902-2. For example, third spectral signal 900-3 may be acquired after moving the sample positioning system in an increment relative to a position of the sample positioning system in which second spectral signal 900-2 was acquired. Based on such spectral signals 900, the third spectral signal 900-3 may be determined to have a maximum peak signal strength 902 relative to the first spectral signal 900-1 and the second spectral signal 900-2 such that the position of the spectral measurement system in which the third spectral signal 900-3 was acquired may be used to determine the first location of the first feature.

In some examples, the first location of the first feature may be determined based on a peak signal strength exceeding a threshold. For example, the threshold may be configured to indicate that the first feature of the calibration sample is sufficiently aligned relative to the aperture and/or focal region of the light (e.g., to provide accurate spectral measurements of samples stored in a sample holder at a location corresponding to the first location). To illustrate, when the peak signal strength of the spectral signal acquired at the first expected location exceeds the threshold, the first location of the first feature may be determined to be the first expected location. Alternatively, when the peak signal strength of the spectral signal acquired at the first expected location is below the threshold, the sample positioning system may be moved incrementally about the first expected location such as until another peak signal strength of another spectral signal exceeds the threshold. Accordingly, the first location may be determined based on the position of the sample positioning system in which the peak signal strength exceeds the threshold.

Additionally or alternatively, the sample positioning system may be moved along the x-axis and the y-axis until the spectral measurements converge on a maximum peak signal strength. To illustrate, a spectral signal may be acquired when the sample positioning system is incremented in a first direction along the x-axis and/or y-axis. In instances where the peak signal strength of the spectral signal increases, the sample positioning system may continue to be incremented in the first direction. Alternatively, in instances where the peak signal strength of the spectral signal decreases, the sample positioning system may be incremented in a second opposing direction until a maximum peak signal strength is determined.

Referring back to FIG. 8, method 800 further includes, at operation 804, determining, based on one or more additional spectral measurements output by the spectroscopy system, one or more additional locations associated with one or more additional features of the calibration sample. The one or more additional features of the calibration sample may include one or more of a well (e.g., additional wells included in the first set of non-depth-dependent wells 604 and/or the second set of depth-dependent wells 606), an aperture (e.g., first aperture 612 and/or second aperture 616), or a focal point (e.g., associated with non-focal depth-dependent reference material 614 and/or focal depth-dependent reference material 618). In some examples, the one or more additional features include a center of a well of a plate according to an SLAS standard.

The one or more additional locations may be representative of one or more additional coordinates of the one or more additional features along the x-axis and the y-axis such as relative to the first location. For example, the spectroscopy system may be configured to move the sample positioning system (e.g., sample support 200) along the x-axis and the y-axis to position the calibration sample for performing the one or more additional spectral measurements to determine the one or more additional locations of the one or more additional features. In some examples, the one or more additional locations may be determined based on a peak signal strength of the one or more additional spectral measurements associated with the one or more additional features such as by using an algorithm (e.g., a simplex algorithm).

As an illustrative example, an additional feature of the calibration sample may have an additional expected location (e.g., along the x-axis and the y-axis), such as based on the SLAS standard and/or designated by a user input. The sample positioning system may be moved to align the additional expected location of the additional feature with the opening of the sample positioning system configured to direct light toward the calibration sample. To illustrate, the additional feature may include a second non-depth-dependent well 604-2 such that the additional expected location of the center of second non-depth-dependent well 604-2 is positioned along the x-axis and the y-axis within an expected focal point of the light. The spectrometry system may perform a spectral measurement associated with the additional feature at the additional expected location. To illustrate, the spectrometry system may generate light that is directed through the opening of the sample positioning system. In instances where the additional feature is sufficiently aligned with the opening and/or a focal point of the light at the additional expected location, the light generated by the spectrometry system illuminates material (e.g., non-focal depth-dependent reference material 614) associated with the additional feature of the calibration sample. The material associated with the additional feature may be configured to emit light (e.g., scattered light 118) that may be detected by a detector (e.g., detector 126) of the spectrometry system to acquire a spectral signal. Alternatively, in instances where the additional feature is misaligned with the opening and/or a focal point of the light at the additional expected location, the light generated by the spectrometry system may not illuminate the material associated with the additional feature such that no spectral signal may be acquired and/or the light emitted by the material associated with the additional feature may provide a weak spectral signal (e.g., having a small peak).

The sample positioning system may further be moved in increments along the x-axis and/or the y-axis to move the additional feature relative to the opening about the additional expected location and one or more additional spectral measurements may be performed by the spectrometry system to acquire a spectral signal associated with the additional feature at each increment. To illustrate, the sample positioning system may be moved to position the additional feature of the calibration sample about the additional expected location in increments according to a pattern (e.g., a box pattern, a circular pattern, a zig-zag pattern, etc.). A peak signal strength (e.g., a peak amplitude and/or centroid) of each spectral signal may be determined for each spectral measurement associated with the additional feature at each increment. A spectral signal having a maximum peak signal strength (e.g., a peak signal strength higher than another spectral signal) may correspond to the additional feature being properly aligned with the opening and/or a focal point of light being transmitted through the opening of the sample positioning system. Accordingly, the additional location of the additional feature may be determined based on the position of the sample positioning system in which a spectral signal having a higher peak signal strength relative to another peak signal strength was acquired.

In some examples, the additional location of the additional feature may be determined based on a peak signal strength exceeding a threshold. For example, the threshold may be configured to indicate that the additional feature of the calibration sample is sufficiently aligned relative to the opening and/or focal point of the light (e.g., to provide accurate spectral measurements of samples stored in a sample holder at locations corresponding to the additional location). To illustrate, when the peak signal strength of the spectral signal acquired at the additional expected location exceeds the threshold, the additional location of the additional feature may be determined to be the additional expected location. Alternatively, when the peak signal strength of the spectral signal acquired at the additional expected location is below the threshold, the sample positioning system may be moved incrementally about the additional expected location such as until another peak signal strength of another spectral signal exceeds the threshold. Accordingly, the additional location may be determined based on the position of the sample positioning system in which the peak signal strength exceeds the threshold. In some examples, the additional location may include a distance (e.g., along the x-axis and/or the y-axis) that the additional location is offset relative to the additional expected location and/or the first location.

Additionally or alternatively, the sample positioning system may be moved along the x-axis and the y-axis until the additional spectral measurements converge on a maximum peak signal strength. To illustrate, a spectral signal may be acquired when the sample positioning system is incremented in a first direction along the x-axis and/or y-axis. In instances where the peak signal strength of the spectral signal increases, the sample positioning system may continue to be incremented in the first direction. Alternatively, in instances where the peak signal strength of the spectral signal decreases, the sample positioning system may be incremented in a second opposing direction until a maximum peak signal strength is determined.

In some examples, the spectroscopy system may continue to move the sample positioning system and perform additional spectral measurements associated with additional features (e.g., the remaining wells included in first set of non-depth-dependent wells 604) of the calibration sample to determine additional locations of the additional features.

Method 800 further includes, at operation 806, generating, based on the first location and the one or more additional locations, calibration data for calibrating motion of the sample positioning system along the x-axis and the y-axis. In some examples, the calibration data may include calibration values representative of differences associated with the first location relative to the first expected location of the first feature along the x-axis and the y-axis as well as differences associated with one or more additional locations relative to one or more additional expected locations of the one or more additional features along the x-axis and the y-axis. Such differences may include one or more of a skew, an offset, or a scale associated with the calibration sample and/or the sample positioning system. The calibration values may be represented by any suitable metric, such as one or more discrete values (e.g., a coordinate, a distance, a direction, an angle, a slope, etc.).

As an illustrative example, FIG. 10 shows an implementation 1000 of calibration sample 600 skewed from an expected position 1002 of calibration sample 600 (e.g., when calibration sample 600 is inserted with sample support 200 of sample positioning system 104 without any variances). As shown, calibration plate 602 of calibration sample 600 is skewed along the x-axis (e.g., as indicated by ΔX) and along the y-axis (e.g., as indicated by ΔY). Based on expected position 1002, expected locations 1004 of one or more features of calibration sample 600 may be determined, such as according to an SLAS standard and/or as designated by a user input. For example, each expected location 1004 corresponds to an expected location of a respective well included in the first set of non-depth-dependent wells 604 such as according to a standard distance between the wells. Based on the spectral measurements, actual locations 1006 (e.g., locations 1006-1 through 1006-4) are determined, such as for each respective well included in the first set of non-depth-dependent wells 604.

To illustrate, the one or more calibration values may include one or more of a distance between a first expected location 1004-1 of first non-depth-dependent well 604-1 and a first location 1006-1 of first non-depth-dependent well 604-1 along the x-axis, a distance between first expected location 1004-1 and first location 1006-1 along the y-axis, a total distance between first expected location 1004-1 and first location 1006-1, an angle between an x-axis and another axis extending between first expected location 1004-1 to first location 1006-1, or an angle between a y-axis and another axis extending between first expected location 1004-1 to first location 1006-1.

Such calibration values may additionally or alternatively be determined for additional locations 1006, such as between a second expected location 1004-2 of second non-depth-dependent well 604-2 and a second location 1006-2 of second non-depth-dependent well 604-2, between a third expected location 1004-3 of third non-depth-dependent well 604-3 and a third location 1006-3 of third non-depth-dependent well 604-3, and/or between a fourth expected location 1004-4 of fourth non-depth-dependent well 604-4 and a fourth location 1006-4 of fourth non-depth-dependent well 604-4. In some examples, the calibration data associated with the additional locations 1006 (e.g., second location 1006-2, third location 1006-3, and fourth location 1006-4) is provided with respect to the additional expected locations 1004 (e.g., second expected location 1004-2, third expected location 1004-3, and fourth expected location 1004-4), such as offset relative to the additional expected locations 1004. Additionally or alternatively, the calibration data associated with the additional locations 1006 may be provided with respect to the first location 1006-1, such as offset relative to the first location 1006-1. The one or more calibration values may additionally or alternatively include a slope along one or more lines (e.g., as indicated by the dotted lines) between two locations 1006, a slope along one or more expected lines (e.g., as indicated by the solid lines) between two expected locations 1004, and/or an angle between a line and a respective expected line. Still other suitable differences may be included in the calibration data.

In some examples, the sample positioning system is configured to move along the x-axis and the y-axis without moving along a z-axis. In these instances, motion of the sample positioning system be calibrated in only the x-axis and the y-axis. Alternatively, the sample positioning system may be configured to move along the z-axis in addition to the x-axis and the y-axis. In these instances, motion of the sample positioning system may further be calibrated along the z-axis. In some examples, the optics for directing the light towards the sample may be adjusted to adjust the focal point of the light along the z-axis. For example, the focusing lens 116 in FIG. 1 and FIG. 7 may be motorized to move the focal point of the illuminating light along the z-axis. For example, based on one or more spectral measurements received from the spectroscopy system, a second location may be determined that is associated with a second feature of the calibration sample supported by the sample positioning system. In some examples, the second location may further be representative of the coordinate of the first feature along the z-axis. Based on the second location, the calibration data may be generated for calibrating motion of the sample positioning system along the z-axis. Similar to determining the first location (X-Y) location of the first feature, focal point may be adjusted along the z-axis while the spectral signals are acquired. The second location may then be determined at the location wherein the strongest peak signal strength is detected.

As an illustrative example, FIG. 11 shows an illustrative implementation 1100 of calibration sample 600 skewed from an expected position 1102 of calibration sample 600 (e.g., when calibration sample 600 is inserted with sample support 200 of sample positioning system 104 without any variances) along the z-axis (e.g., as indicated by ΔZ). As shown, based on expected position 1102, one or more expected locations 1104 (e.g., expected locations 1104-1 through 1104-2) may be determined, such as according to an SLAS standard and/or as designated by a user input. For example, each expected location 1104 corresponds to an expected location of a respective well included in the second set of depth-dependent wells 606. Based on the spectral measurements, actual locations 1106 (e.g., locations 1106-1 through 1106-2) are determined, such as for each respective well included in the second set of depth-dependent wells 606.

To illustrate, the one or more calibration values may include one or more of a distance between a first expected location 1104-1 of first depth-dependent well 606-1 and a first location 1106-1 of first depth-dependent well 606-1 along the z-axis. Such one or more calibration values may additionally or alternatively be determined for additional locations 1106, such as between a second expected location 1104-2 of second depth-dependent well 606-2 and a second location 1106-2 of second depth-dependent well 604-2, etc. The one or more calibration values may additionally or alternatively include a slope along one or more lines (e.g., as indicated by the dotted line) between two locations 1106, a slope along one or more expected lines (e.g., as indicated by the solid line) between two expected locations 1104, and/or an angle between a line and a respective expected line.

In some examples, the locations 1106 associated with second features (e.g., wells included in the second set of depth-dependent wells 606) of calibration sample 600 are representative of locations 1006 associated with first features (e.g., wells included in the first set of non-depth-dependent wells 604) of calibration sample 600 along the z-axis. To illustrate, the first location 1106-1 associated with the first depth-dependent well 606-1 along the z-axis may correspond to the first location 1006-1 associated with the respective first non-depth-dependent well 604-1 along the z-axis. Likewise, the second location 1106-2 associated with the second depth-dependent well 606-2 along the z-axis may correspond to the second location 1006-2 associated with the respective second non-depth-dependent well 604-2 along the z-axis, and so on.

Referring back to FIG. 8, method 800 further includes, at operation 808, positioning a sample (e.g., sample 112, sample 300), using the sample positioning system, based on the calibration data for performing spectral measurements of the sample (e.g., one or more analytes included in the sample). For example, the calibration data may be applied to the sample positioning system such as for a measurement procedure to generate one or more spectral measurements using the sample positioning system. For example, after generating the calibration data, calibration sample 600 may be removed from sample positioning system 104. Another sample, such as sample 300, may be inserted into sample support 200 of sample positioning system 104 that may include one or more features (e.g., wells 304) for receiving one or more analytes. Sample positioning system 104 may be moved (e.g., by controller 108) to position wells 304 of sample 300 containing one or more samples of interest with opening 208 to illuminate the one or more analytes and acquire one or more spectral measurements associated with the one or more analytes (e.g., as shown in FIGS. 5A and 5B). When sample positioning system 104 is moved, sample positioning system 104 is moved according to the calibration data to calibrate motion of sample positioning system 104. As an illustrative example, if an analyte of interest is contained within a first well 304-1 of sample 300 corresponding to first non-depth dependent well 604-1 of calibration sample 600, sample positioning system 104 may be moved to first location 1006-1 (e.g., instead of first expected location 1004-1). Moreover, actual locations of other wells 304 of sample 300 positioned within sample positioning system 104 may be derived based on the calibration data such that sample positioning system 104 is moved to the actual locations of wells 304 (e.g., along the x-axis, y-axis, and/or z-axis) instead of the expected locations of wells 304 to account for variances associated with sample positioning system 104.

In certain embodiments, one or more of the systems, components, and/or processes described herein may be implemented and/or performed by one or more appropriately configured computing devices. To this end, one or more of the systems and/or components described above may include or be implemented by any computer hardware and/or computer-implemented instructions (e.g., software) embodied on at least one non-transitory computer-readable medium configured to perform one or more of the processes described herein. In particular, system components may be implemented on one physical computing device or may be implemented on more than one physical computing device. Accordingly, system components may include any number of computing devices, and may employ any of a number of computer operating systems.

In certain embodiments, one or more of the processes described herein may be implemented at least in part as instructions embodied in a non-transitory computer-readable medium and executable by one or more computing devices. In general, a processor (e.g., a microprocessor) receives instructions, from a non-transitory computer-readable medium, (e.g., a memory, etc.), and executes those instructions, thereby performing one or more processes, including one or more of the processes described herein. Such instructions may be stored and/or transmitted using any of a variety of known computer-readable media.

A computer-readable medium (also referred to as a processor-readable medium) includes any non-transitory medium that participates in providing data (e.g., instructions such as a computer program product embodied on the computer-readable medium) that may be read by a computer (e.g., by a processor of a computer). Such a medium may take many forms, including, but not limited to, non-volatile media, and/or volatile media. Non-volatile media may include, for example, optical or magnetic disks and other persistent memory. Volatile media may include, for example, dynamic random access memory ("DRAM"), which typically constitutes a main memory. Common forms of computer-readable media include, for example, a disk, hard disk, magnetic tape, any other magnetic medium, a compact disc read-only memory ("CD-ROM"), a digital video disc ("DVD"), any other optical medium, random access memory ("RAM"), programmable read-only memory ("PROM"), electrically erasable programmable read-only memory ("EPROM"), FLASH-EEPROM, any other memory chip or cartridge, or any other tangible medium from which a computer can read.

Advantages and features of the present disclosure can be further described by the following statements:
Clause 1. A method for calibrating a sample positioning system of a spectroscopy system, comprising: determining, based on one or more spectral measurements output by the spectroscopy system, a first location associated with a first feature of a calibration sample supported by the sample positioning system, wherein the sample positioning system is configured to translate the calibration sample along an x-axis and a y-axis of the sample positioning system to position the calibration sample for performing the one or more spectral measurements, wherein the first location is representative of a coordinate of the first feature in the x-axis and the y-axis; determining, based on one or more additional spectral measurements output by the spectroscopy system, one or more additional locations associated with one or more additional features of the calibration sample, the one or more additional locations representative of one or more additional coordinates of the one or more additional features along the x-axis and the y-axis; and generating, based on the first location and the one or more additional locations, calibration data for calibrating motion of the sample positioning system along the x-axis and the y-axis.
Clause 2. The method of any of the proceeding clauses, further comprising: determining, based on the one or more spectral measurements output by the spectroscopy system, a second location associated with a second feature of the calibration sample supported by the sample positioning system included in the spectroscopy system, the second location is further representative of the coordinate of the first feature along a z-axis; and generating, further based on the second location, the calibration data for calibrating motion of the sample positioning system along the x-axis, the y-axis, and the z-axis.
Clause 3. The method of any of the proceeding clauses, wherein the calibration data including calibration values representative of differences associated with the first location relative to a first expected location of the first feature along the x-axis and the y-axis and the one or more additional locations relative to one or more additional expected locations of the one or more additional features along the x-axis and the y-axis.
Clause 4. The method of any of the proceeding clauses, wherein the determining the first location is based on a peak signal strength of the one or more spectral measurements and the determining the one or more additional locations is based on a peak signal strength of the one or more additional spectral measurements.
Clause 5. The method of any of the proceeding clauses, further comprising applying the calibration data to the sample positioning system for a measurement procedure to generate one or more spectral measurements using the spectroscopy system.
Clause 6. The method of any of the proceeding clauses, wherein the calibration sample includes a calibration plate comprising: a first set of at least three wells, each well of the first set of at least three wells having a first aperture and a non-focal depth-dependent reference material, wherein the first feature and the one or more additional features correspond to one or more of the first set of at least three wells; and a second set of at least three wells, each well of the second set of at least three wells having a second aperture and a focal depth-dependent reference material, wherein the second feature corresponds to one or more of the second set of at least three wells.
Clause 7. The method of any of the proceeding clauses, wherein each well of the second set of at least three wells is offset from a respective well of the first set of at least three wells at different corners of the calibration plate, and a distance of the offset is within 10 millimeters.
Clause 8. The method of any of the proceeding clauses, wherein the calibration plate is the same size of a plate according to a Society for Laboratory Automation and Screening (SLAS) standard.
Clause 9. A spectroscopy system, comprising: a sample positioning system, the sample positioning system is configured to move a sample along an x-axis and a y-axis of the sample positioning system; a source and a detector for performing spectral measurements of the sample; a memory for storing instructions; and one or more processors communicatively coupled to the memory and configured to execute the instructions to perform a process comprising: performing one or more spectral measurements of a calibration sample; determining, based on the one or more spectral measurements, a first location associated with a first feature of the calibration sample, wherein the first location is representative of a coordinate of the first feature along the x-axis and the y-axis; performing one or more additional spectral measurements of the calibration sample; determining, based on the one or more additional spectral measurements, one or more additional locations associated with one or more additional features of the calibration sample, the one or more additional locations representative of one or more additional coordinates of the one or more additional features along the x-axis and the y-axis; generating, based on the first location and the one or more additional locations, calibration data for calibrating motion of the sample positioning system along the x-axis and the y-axis; positioning the sample, using the sample positioning system, based on the calibration data; and performing spectral measurements of the sample.
Clause 10. The spectroscopy system of any of the proceeding clauses, wherein the process further comprising: determining, based on the one or more spectral measurements, a second location associated with a second feature of the calibration sample, the second location further representative of the coordinate of the first feature along a z-axis of the sample positioning system; and generating, further based on the second location, the calibration data for calibrating motion of the sample positioning system along the x-axis, the y-axis, and the z-axis.
Clause 11. The spectroscopy system of any of the proceeding clauses, wherein the first feature includes a first aperture, wherein the second feature includes a focal depth-dependent reference material positioned behind a second aperture that is larger than the first aperture.
Clause 12. The spectroscopy system of any of the proceeding clauses, wherein a distance between the second location and the first location in an X-Y plane of the calibration sample is within 10 millimeters.
Clause 13. The spectroscopy system of any of the proceeding clauses, wherein the first location at least partially overlaps with the second location.
Clause 14. The spectroscopy system of any of the proceeding clauses, wherein the calibration sample includes a calibration plate according to a Society for Laboratory Automation and Screening (SLAS) standard, and the first feature and the second feature are disposed at locations of adjacent wells in the calibration plate.
Clause 15. The spectroscopy system of any of the proceeding clauses, wherein the calibration sample includes a plate comprising a first set of at least three wells and a second set of at least three wells, each well of the first set of at least three wells having an aperture and a non-focal depth-dependent reference material for determining the calibration data along the x-axis and the y-axis, and the first feature and the one or more additional features correspond to one or more of the first set of at least three wells, each well of the second set of at least three wells having an aperture and a focal depth-dependent reference material for determining the calibration data along the z-axis, and the second feature corresponds to one of the second set of at least three wells.
Clause 16. The spectroscopy system of any of the proceeding clauses, wherein each well of the second set of at least three wells is offset from a respective well of the first set of at least three wells at different corners of the plate.
Clause 17. The spectroscopy system of any of the proceeding clauses, wherein the determining the first location based on the spectral measurements includes determining the first location based on a peak signal strength of one or more spectra from the spectral measurements, and wherein determining the one or more additional locations based on the one or more additional spectral measurements includes determining the additional locations based on a peak signal strength of one or more additional spectra from the additional spectral measurements.
Clause 18. The spectroscopy system of any of the proceeding clauses, wherein the first feature and the one or more additional features are each associated with an aperture of the calibration sample.
Clause 19. The spectroscopy system of any of the proceeding clauses, wherein the calibration data includes calibration values representative of differences associated with the first location relative to a first expected location of the first feature along the x-axis and the y-axis and the one or more additional locations relative to one or more additional expected locations of the one or more additional features along the x-axis and the y-axis.
Clause 20. The spectroscopy system of any of the proceeding clauses, wherein the differences associated with the first location relative to a first expected location of the first feature along the x-axis and the y-axis and the one or more additional locations relative to one or more additional expected locations of the one or more additional features along the x-axis and the y-axis include one or more of a skew, an offset, or a scale associated with the calibration sample.
Clause 21. The spectroscopy system of any of the proceeding clauses, wherein generating the calibration data is further based on a first expected location of the first feature and one or more additional expected locations of the one or more additional features.
Clause 22. The spectroscopy system of any of the proceeding clauses, wherein first feature and the one or more additional expected locations are determined based on locations of the first feature and the one or more additional features on the calibration sample.
Clause 23. The spectroscopy system of any of the proceeding clauses, wherein the calibration sample is the same size of a plate according to a Society for Laboratory Automation and Screening (SLAS) standard.
Clause 24. The spectroscopy system of any of the proceeding clauses, wherein the first feature includes a first aperture corresponding to a center of a well of the plate according to the SLAS standard.
Clause 25. The spectroscopy system of any of the proceeding clauses, wherein the first feature includes an aperture having a diameter from 0.01 millimeters to 1.5 millimeters.
Clause 26. The spectroscopy system of any of the proceeding clauses, further comprising a lens for focusing a light generated from the source to the calibration sample, wherein a location of a focal point of the light along the z-axis is adjusted by adjusting a relative position between the lens and the calibration sample.
Clause 27. The spectroscopy system of any of the proceeding clauses, wherein adjusting a relative position between the lens and the calibration sample includes adjusting a position of the lens, and wherein the sample positioning system does not move the calibration sample along the z-axis.
Clause 28. The spectroscopy system of any of the proceeding clauses, wherein the calibration sample is integrated into the sample positioning system.
Clause 29. The spectroscopy system of any of the proceeding clauses, wherein the sample positioning system moves along the x-axis and y-axis without moving along a z-axis.
Clause 30. A Raman spectroscopy system including the spectroscopy system of any of the proceeding clauses wherein the spectroscopy system is the Raman spectroscopy system.
Clause 31. A calibration plate, comprising: a first set of at least three wells, each well of the first set of at least three wells having a first aperture and a non-focal depth-dependent reference material; and a second set of at least three wells, each well of the second set of at least three wells having a second aperture and a focal depth-dependent reference material.
Clause 32. The calibration plate of any of the proceeding clauses, wherein each well of the second set of at least three wells is offset from a respective well of the first set of at least three wells at different corners of the calibration plate.
Clause 33. The calibration plate of any of the proceeding clauses, wherein a distance of the offset is within 10 millimeters.
Clause 34. The calibration plate of any of the proceeding clauses, wherein each well of the second set of at least three wells is at least partially overlapped with a respective well of the first set of at least three wells at different corners of the calibration plate.
Clause 35. The calibration plate of any of the proceeding clauses, wherein second aperture is larger than the first aperture.
Clause 36. The calibration plate of any of the proceeding clauses, wherein the first aperture includes a diameter from 0.01 millimeters to 1.5 millimeters.
Clause 37. The calibration plate of any of the proceeding clauses, wherein each well of the second set of at least three wells is offset from a respective well of the first set of at least three wells according to a Society for Laboratory Automation and Screening (SLAS) standard.
Clause 38. The calibration plate of any of the proceeding clauses, wherein the calibration plate is the same size of a plate according to a Society for Laboratory Automation and Screening (SLAS) standard.
Clause 39. The calibration plate of any of the proceeding clauses, wherein the first set of at least three wells and the second set of at least three wells include a center of a well location of a plate according to a Society for Laboratory Automation and Screening (SLAS) standard.

It will be recognized by those of ordinary skill in the art that while, in the preceding description, various illustrative embodiments have been described with reference to the accompanying drawings. It will, however, be evident that various modifications and changes may be made thereto, and additional embodiments may be implemented, without departing from the scope of the invention as set forth in the claims that follow. For example, certain features of one embodiment described herein may be combined with or substituted for features of another embodiment described herein. The description and drawings are accordingly to be regarded in an illustrative rather than a restrictive sense.

## Claims

1. A method for calibrating a sample positioning system of a spectroscopy system, comprising:
determining, based on one or more spectral measurements output by the spectroscopy system, a first location associated with a first feature of a calibration sample supported by the sample positioning system, wherein the sample positioning system is configured to translate the calibration sample along an x-axis and a y-axis of the sample positioning system to position the calibration sample for performing the one or more spectral measurements, wherein the first location is representative of a coordinate of the first feature in the x-axis and the y-axis;
determining, based on one or more additional spectral measurements output by the spectroscopy system, one or more additional locations associated with one or more additional features of the calibration sample, the one or more additional locations representative of one or more additional coordinates of the one or more additional features along the x-axis and the y-axis; and
generating, based on the first location and the one or more additional locations, calibration data for calibrating motion of the sample positioning system along the x-axis and the y-axis.

2. The method of claim 1, further comprising:
determining, based on the one or more spectral measurements output by the spectroscopy system, a second location associated with a second feature of the calibration sample supported by the sample positioning system included in the spectroscopy system, the second location is further representative of the coordinate of the first feature along a z-axis; and
generating, further based on the second location, the calibration data for calibrating motion of the sample positioning system along the x-axis, the y-axis, and the z-axis.

3. The method of claim 2, wherein the calibration sample includes a calibration plate comprising:
a first set of at least three wells, each well of the first set of at least three wells having a first aperture and a non-focal depth-dependent reference material, wherein the first feature and the one or more additional features correspond to one or more of the first set of at least three wells; and
a second set of at least three wells, each well of the second set of at least three wells having a second aperture and a focal depth-dependent reference material, wherein the second feature corresponds to one or more of the second set of at least three wells.

4. The method of claim 3, wherein each well of the second set of at least three wells is offset from a respective well of the first set of at least three wells at different corners of the calibration plate, and a distance of the offset is within 10 millimeters.

5. The method of claim 3, wherein the calibration plate is the same size of a plate according to a Society for Laboratory Automation and Screening (SLAS) standard.

6. The method of any of previous claims, wherein the calibration data including calibration values representative of differences associated with the first location relative to a first expected location of the first feature along the x-axis and the y-axis and the one or more additional locations relative to one or more additional expected locations of the one or more additional features along the x-axis and the y-axis.

7. The method of any of previous claims, wherein the determining the first location is based on a peak signal strength of the one or more spectral measurements and the determining the one or more additional locations is based on a peak signal strength of the one or more additional spectral measurements.

8. A spectroscopy system, comprising:
a sample positioning system, the sample positioning system is configured to move a sample along an x-axis and a y-axis of the sample positioning system;
a source and a detector for performing spectral measurements of the sample;
a memory for storing instructions; and
one or more processors communicatively coupled to the memory and configured to execute the instructions to perform a process comprising:
performing one or more spectral measurements of a calibration sample;
determining, based on the one or more spectral measurements, a first location associated with a first feature of the calibration sample, wherein the first location is representative of a coordinate of the first feature along the x-axis and the y-axis;
performing one or more additional spectral measurements of the calibration sample;
determining, based on the one or more additional spectral measurements, one or more additional locations associated with one or more additional features of the calibration sample, the one or more additional locations representative of one or more additional coordinates of the one or more additional features along the x-axis and the y-axis;
generating, based on the first location and the one or more additional locations, calibration data for calibrating motion of the sample positioning system along the x-axis and the y-axis;
positioning the sample, using the sample positioning system, based on the calibration data; and
performing spectral measurements of the sample.

9. The spectroscopy system of claim 8, wherein the process further comprising:
determining, based on the one or more spectral measurements, a second location associated with a second feature of the calibration sample, the second location further representative of the coordinate of the first feature along a z-axis of the sample positioning system; and
generating, further based on the second location, the calibration data for calibrating motion of the sample positioning system along the x-axis, the y-axis, and the z-axis.

10. The spectroscopy system of claim 9, wherein the first feature includes a first aperture, wherein the second feature includes a focal depth-dependent reference material positioned behind a second aperture that is larger than the first aperture.

11. The spectroscopy system of claim 9, wherein a distance between the second location and the first location in an X-Y plane of the calibration sample is within 10 millimeters.

12. The spectroscopy system of claim 9, wherein the calibration sample includes a plate comprising a first set of at least three wells and a second set of at least three wells, each well of the first set of at least three wells having an aperture and a non-focal depth-dependent reference material for determining the calibration data along the x-axis and the y-axis, and the first feature and the one or more additional features correspond to one or more of the first set of at least three wells, each well of the second set of at least three wells having an aperture and a focal depth-dependent reference material for determining the calibration data along the z-axis, and the second feature corresponds to one of the second set of at least three wells.

13. The spectroscopy system of claim 9, further comprising a lens for focusing a light generated from the source to the calibration sample, wherein a location of a focal point of the light along the z-axis is adjusted by adjusting a relative position between the lens and the calibration sample.

14. The spectroscopy system of claim 13, wherein adjusting a relative position between the lens and the calibration sample includes adjusting a position of the lens, and wherein the sample positioning system does not move the calibration sample along the z-axis.

15. The spectroscopy system of any of claims 8-14, wherein the calibration data includes calibration values representative of differences associated with the first location relative to a first expected location of the first feature along the x-axis and the y-axis and the one or more additional locations relative to one or more additional expected locations of the one or more additional features along the x-axis and the y-axis.
